# EUROPEAN PATENT APPLICATION

(11) **EP 2 062 473 A1**
(43) Date of publication of application: **27.05.2009**
(21) Application number: 07425743.7
(22) Date of filing: 23.11.2007
(51) Int. Cl.: A01B 59/042, B60D 1/46

(54) **Tow assembly for agricultural machines**

(71) Applicant: ARIES S.r.l., 06019 Umbertide (IT)
(72) Inventor: Minelli, Mauro, 06080 Colombella Perugia (IT); Leandri, Francesco, 06017 Selci (IT)
(74) Representative: Jorio, Paolo

(57) **Abstract**

A tow assembly for an agricultural machine presents two guides (11, 16) engaged in a sliding manner by respective slides (12, 18, 19) of two sliding tow hooks (13, 17), each fitted with a respective hooking pin (14, 20) for coupling an agricultural equipment to the agricultural machine itself.

## Description

The present invention relates to a tow assembly for agricultural machines.

In particular, the present invention relates to a tow assembly comprising a frame which is fixed to an agricultural machine, presents a substantially U-shape with concave side pointing up, and includes two vertical rods substantially parallel to each other and connected to each other through a fixed horizontal cross-piece fitted with a first hooking pin for coupling an agricultural equipment to the agricultural machine itself.

The tow assembly further comprises a vertical guide obtained along the two vertical rods and engaged in a sliding manner by a slide of a tow hook fitted with a second hooking pin for coupling an agricultural equipment to the agricultural machine.

Known tow assemblies of the type described above have some drawbacks mainly deriving from the fact that the fixed vertical position of the first hooking pin gives these tow assemblies relatively reduced versatility and involves some difficulties in the operations of hooking and unhooking of the agricultural equipment respectively to and from the first hooking pin.

It is an object of the present invention to provide a tow assembly for agricultural machines that overcomes the drawbacks described above and is simple and cost-effective to produce.

A tow assembly for agricultural machines is provided according to the present invention as set forth in the appended claims.

The present invention will now be described with reference to the attached drawings, illustrating a nonlimiting embodiment thereof, in which:
Figure 1 is a schematic exploded perspective view of a preferred embodiment of the tow assembly according to the present invention;
Figure 2 is a schematic perspective view of a first detail of the tow assembly in Figure 1; and
Figure 3 is a schematic side view of a second detail of the tow assembly in figure 1, with parts shown in cross-section and parts removed for the sake of clarity.

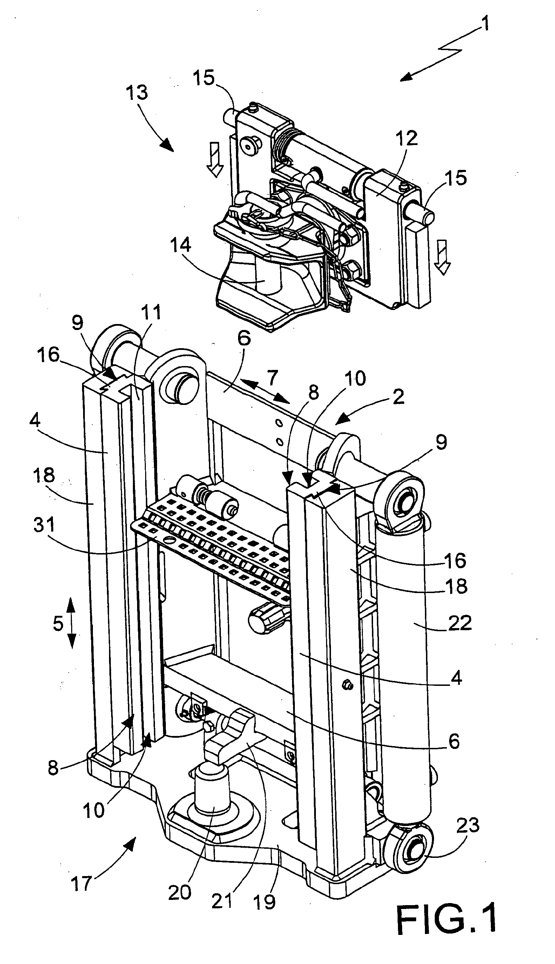

With reference to figure 1, number 1 indicates, as a whole, a tow assembly for known and not illustrated agricultural machines.

The tow assembly 1 comprises a frame 2 which is fixed to an agricultural machine (not illustrated), extends around a power takeoff 3 of the agricultural machine itself and comprises, in turn, two vertical rods 4 parallel to each other that extend in a substantially vertical direction 5 and are connected to each other through a pair of cross-pieces 6 substantially parallel to each other and to a horizontal direction 7 that crosses direction 5 itself.

Each vertical rod 4 is limited on its sides in direction 7 by two side faces 8, 9 substantially parallel and opposite to each other, and where the face 8 is facing the face 8 of the other vertical rod 4.

Each vertical rod 4 presents a longitudinal groove 10 which is obtained on its relative face 8 parallel to direction 5 and is fitted with a plurality of holes (not illustrated) which are obtained on the vertical rod 4 parallel to direction 7, are aligned with each other in direction 5, and are each aligned with a relative hole (non illustrated) in the other groove 10 in direction 7 itself.

The two grooves 10 define a guide 11 apt to receive in a sliding manner a slide 12 of a first tow hook 13 of known type, further comprising a first hooking pin 14 led by the slide 12 to enable the hooking of known and not illustrated agricultural equipment to said agricultural machine (not illustrated), and a pair of locking pins 15 opposite each other which extend in direction 7, protrude outside the slide 12 in direction 7, and are mobile, with respect to the slide 12, in direction 7 itself between an extracted locking position (figure 1), in which the pins 15 engage respective holes (not illustrated) of the relative vertical rods 4, and a backward unhooking position (not illustrated).

Each vertical rod 4 further presents a dovetail guide 16 which is obtained on its relative face 9 parallel to direction 5 and cooperates with the guide 16 of the other vertical rod 4 to support a second tow hook 17 in a sliding manner.

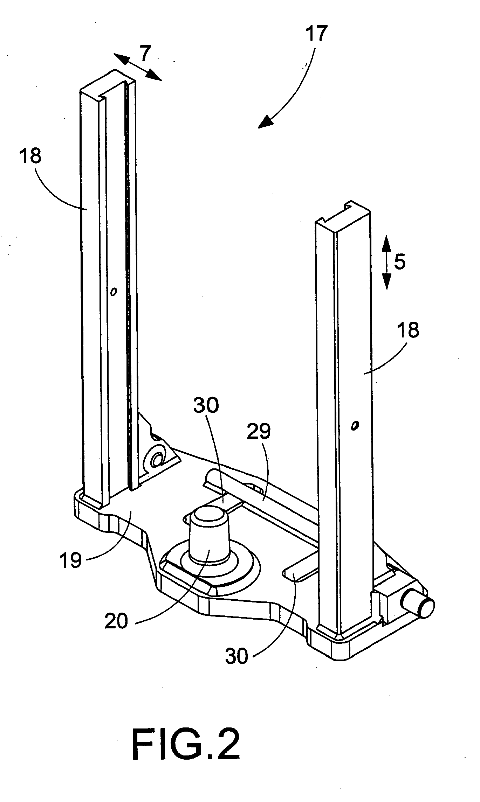

According to that illustrated in figures 1 and 2, the tow hook 17 comprises two brackets 18 parallel to each other which extend in direction 5, each matched in a sliding manner to a relative guide 16, and connected to each other by an end cross-piece 19 that extends between the brackets 18 parallel to direction 7, and is fitted with a second hooking pin 20 projecting upwards from the cross-piece 19 in direction 5 to enable the hooking of known and not illustrated agricultural equipment to the said agricultural machine (not illustrated).

The tow hook 17 is mobile between a raised position (figure 1), in which the cross-piece 19 and the pin 20 cooperate with a locking element 21 protruding from the lower cross-piece 6 to prevent said agricultural equipment (not illustrated) from disengaging the pin 20 itself, and a lowered position (not illustrated), in which the cross-piece 19 and the pin 20 are arranged at a distance determined by the element 21 to enable the hooking and unhooking of said agricultural equipment (not illustrated) respectively to and from the pin 20 itself.

With reference to figure 1, the tow hook 17 is moved between its lowered and raised positions by two actuator cylinders 22 which are fixed to the frame 2 opposite the upper cross-piece 6 in direction 7, extend in direction 5, and present respective exit bars 23 connected to the cross-piece 19.

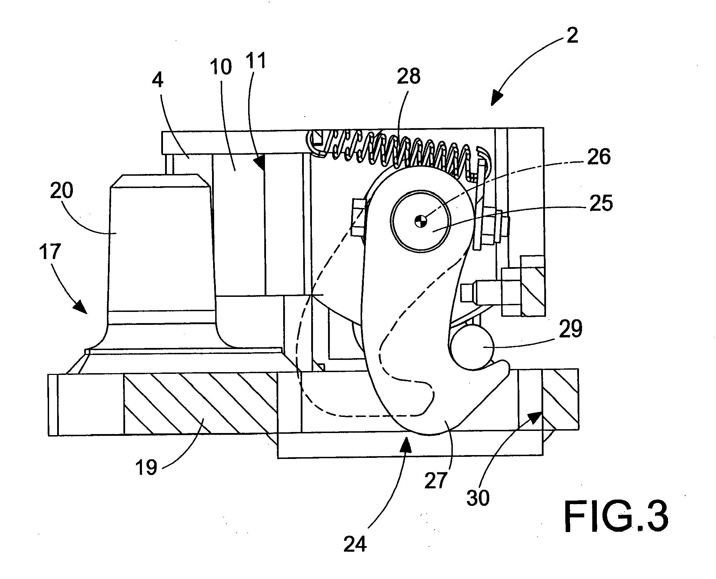

According to that illustrated in figures 2 and 3, the raised position of the tow hook 17 is ensured thanks to a security device 24 comprising a support shaft 25 mounted rotatingly through the frame 2 to rotate around its own longitudinal axis 26 parallel to direction 7, and a pair of even hooks 27 parallel to each other, which are mounted on the shaft 25 orthogonal to direction 7, protrude downwards from the shaft 25, and are normally maintained in a hooking position (illustrated as an unbroken line in figure 3) by a pair of springs 28 placed between the lower cross-piece 6 and the hooks 27 themselves.

During the movement of the tow hook 17 from its lowered position to its raised position, the two hooks 27 are first moved to a release position (illustrated as a broken line in figure 3) by means of a bar 29 fixed on the cross-piece 19 parallel to direction 7, and then engage in a sliding manner respective slits 30 parallel to each other, which are obtained through the cross-piece 19 in direction 5 and extend below the bar 29 itself.

When the tow hook 17 reaches its raised position and the bar 29 is arranged above the hooks 27, the hooks 27 are moved by the springs 28 in their hooking position for the bar 29 (figure 3) and cooperate with the cylinders 22 to ensure the proper maintenance of the tow hook 17 in its raised position.

To enable the movement of the tow hook 17 from its raised position to its lowered position, the hooks 27 are directly moved by the operator into their release position through a tie-rod (not illustrated) connected to a shaft 25 and mounted inside the driving cab of said agricultural machine (not illustrated).

Since the tow hooks 13 and 17 are normally used alternating with each other, it should be noted that the tow assembly 1 is also fitted with a protective casing 31 which is mounted on the frame 2 between the two vertical rods 4 and is selectively moved between an operating position (Figure 1), in which the casing 31 is arranged transversely to direction 5 to prevent access to the power takeoff 3 and enables the use of the tow hook 17, and a resting position (not illustrated), in which the casing 31 is arranged on the outside of the guide 11 to enable the use of the tow hook 13.

The structure of the frame 2 therefore ensures access to and protection of the power takeoff 3, while the tow assembly 1 presents such an overall size as to enable the use of a three-point equipment fastening.

The functioning of the tow assembly 1 is easily inferable from the foregoing and needs no further explanation.

## Claims

1. Tow assembly for agricultural machines, the tow assembly comprising a frame (2) apt to be fixed to an agricultural machine; a first guide (11) obtained on the frame (2); a first tow hook (13) comprising, in turn, a first slide (12) mobile along the first guide (11) and a first hooking element (14) for coupling an agricultural equipment to the agricultural machine; and a second tow hook (17) mounted on the frame (2) and fitted with a second hooking element (20) for coupling an agricultural equipment to the agricultural machine; and being **characterized in that** it further comprises a second guide (16) obtained on the frame (2) and parallel to the first guide (11); the second tow hook (17) comprising a second slide (18, 19) mobile along the second guide (16) and fitted with the second hooking element (20).

2. Tow assembly according to claim 1, in which the frame (2) comprises two vertical rods (4) substantially parallel to each other, each of which is limited on its sides by a first face (8) facing the first face (8) of the other vertical rod (4) and by a second face (9) substantially parallel and opposite to the first face (8); the first guide (11) being obtained along said first faces (8) and the second guide (16) being obtained along said second faces (9).

3. Tow assembly according to claims 1 or 2, and further comprising a locking device (24) of the second slide (18, 19) along the second guide (16).

4. Tow assembly according to claim 3, in which the locking device (24) comprises at least a locking member (27) of the second slide (18, 19) on the frame (2) and actuator means (28) to move the locking member (27) between a locked position of the second slide (18, 19) on the frame (2) and a release position.

5. Tow assembly according to claim 4, in which the actuator means (28) comprise first actuator means (28) to move the locking member (27) from the release position to the locked position and second actuator means to move the locking member (27) from the locked position to the release position.

6. Tow assembly according to claim 5, in which the first actuator means (28) are elastic actuator means to move and normally maintain the locking member (27) in its locked position.

7. Tow assembly according to claims 5 or 6, in which the second actuator means comprise a tie-rod connected to the locking member (27) and operable from within a driving cab of the agricultural machine to move the locking member (27) itself from the locking position to the release position.

8. Tow assembly according to any of the claims from 4 to 7, in which the second slide (18, 19) is mobile along the second guide (16) between a lowered position and a raised position and is fitted to move the locking member (27) in its release position during movement from its lowered position to its raised position and to be hooked by the locking member (27) when arranged in its raised position.

9. Tow assembly according to any of the preceding claims, and further comprising a driving gear (22) to move the second slide (18, 19) between a lowered position to enable the hooking and unhooking of the agricultural equipment respectively to and from the agricultural machine, and a raised tow position of the agricultural equipment itself.

10. Tow assembly according to claim 9, and further comprising an additional locking member (21) mounted on the frame (2) to prevent the disengagement of the agricultural equipment from the second hooking element (20) when the second slide (18, 19) is arranged in its raised tow position.
